# EUROPEAN PATENT SPECIFICATION

(11) **EP 0 745 521 B1**
(45) Date of publication and mention of the grant of the patent: **23.12.1998**
(21) Application number: 95303531.8
(22) Date of filing: 24.05.1995
(51) Int. Cl.: B60R 25/02

(54) **Automobile steering lock**
Lenkradschloss für Kraftfahrzeuge
Antivol de direction pour véhicule automobile

(43) Date of publication of application: 04.12.1996
(73) Proprietor: Chen, Tian-Yuan, Taipei Hsien (TW)
(72) Inventor: Chen, Tian-Yuan, Taipei Hsien (TW)
(74) Representative: Lyons, Andrew John

(56) References cited:
- EP-A- 0 630 784
- DE-U- 9 209 927
- DE-U- 9 302 542
- DE-U- 9 304 882
- DE-U- 9 418 702
- FR-A- 2 579 536
- GB-A- 2 264 911
- US-A- 5 128 649
- US-A- 5 365 215

## Description

### Background of the invention.

This invention concerns an anti-theft lock for attachment to a steering wheel of an automobile, particularly one using a remote controller of an electronic alarm set for locking and unlocking this lock, without using a key.

Nowadays many kinds of anti-theft locks are used in automobiles, which are generally unlocked by a key, for example, as described in DE-U-9418702 and EP-A-0630784. In the anti-theft lock of EP-A-0630784 a remotely controlled motor operated lock mechanism is included in addition to the key to enable more convenient attachment and detachment of the device to the steering wheel. However, such locks are liable to be pried open by smart thieves. Additionally, it is known to provide a steering wheel lock connected to an alarm set, for example, as described in GB-A-2264911.

### Summary of invention

Accordingly, the present invention provides an anti-theft lock for attachment to a steering wheel of an automobile, comprising: an inner half housing having a block portion having a front, a rear, a top and a bottom and a curved semiround portion formed across the front of said block portion, said block portion having a passageway in an upper section extending rearwardly from the curved semiround portion, a chamber behind the passageway in the rear end of the block portion, a motor hole in parallel to the passageway in a lower section having an opening in the rear end of the block portion, a deadbolt hole extending upwardly from the bottom of the block portion and communicating with the passageway and the motor hole, two bolt holes being provided extending upwardly from the bottom of the block portion towards the rear end thereof, the deadbolt hole having an opening edge of a larger diameter than itself;
an outer half housing having a curved semiround portion complementary to said curved semi-round portion in said inner half housing and a wall extending up from a centre portion of the semiround portion, a locking rod extending laterally from an upper end of the wall and having a plurality of straight continuous grooves on a bottom surface thereof;
an elongate rod having its front end combined with the rear end of the block portion of said inner half housing by means of two bolts, a recess in a front end surface for disposing a spring therein, a cord hole in a front end bottom, a chamber with an upper opening in a rear portion, and a cord hole in a front wall of the chamber;
an electronic alarm set disposed in the chamber of said elongate rod, and a cap provided to close up the upper opening of the chamber to protect the electronic alarm set;
a deadbolt disposed in the deadbolt hole in the block portion of said inner half housing, the deadbolt having a sloped face and a vertical face abutting on each other at the top of the deadbolt, a flat recess in an intermediate portion, and a spring recess in a bottom end;
a spring disposed in the spring recess of said deadbolt;
a cover welded to close up the deadbolt hole and urging to bias the spring disposed therein;
   whereby the anti-theft lock having a motor disposed in the motor hole of the block portion of said inner half housing having a shaft extending inward and fixed with a semiround activating block at its end, said semiround activating block fitting in the flat recess of said deadbolt, the motor having a power cord disposed through the cord hole in the front wall of the chamber which is connected with a power cord of said electronic alarm set, whereby the anti-theft lock is attached to a steering wheel of an automobile by said inner half housing and said outer half housing being fitted around a portion of the steering wheel and being locked by said deadbolt engaging one of the grooves of the locking rod of the outer half housing, the anti-theft lock being provided with a remote controller to turn on the electronic alarm set ready for giving out high decibel sounds in case of a would-be thief pricking the body of an automobile or the steering wheel rotated so as to prevent the automobile from being stolen and de-activate the same, said remote controller also simultaneously activating or de-activating the motor in the block portion to rotate the activating block to push up or pull down the deadbolt thereby locking or unlocking the anti-theft lock.

Preferably, said locking rod of said outer half housing has an annular groove in a rear end for a stop ring to engage with so as to prevent said locking rod from separating completely from the block portion of said inner half housing.

### Brief description of drawings.

Figure 1 is an exploded perspective view of an automobile steering lock in the present invention.
Figure 2 is a perspective view of the automobile steering lock in the present invention.
Figure 3 is a cross-sectional view of the automobile steering lock in the present invention, showing it in a closed condition.
Figure 4 is a cross-sectional view of the automobile steering lock in the present invention, showing it in an unlocked condition.
Figure 5 is a perspective view of the automobile steering lock in the present invention, showing it applied on the steering wheel of an automobile.

### Detailed description of the invention.

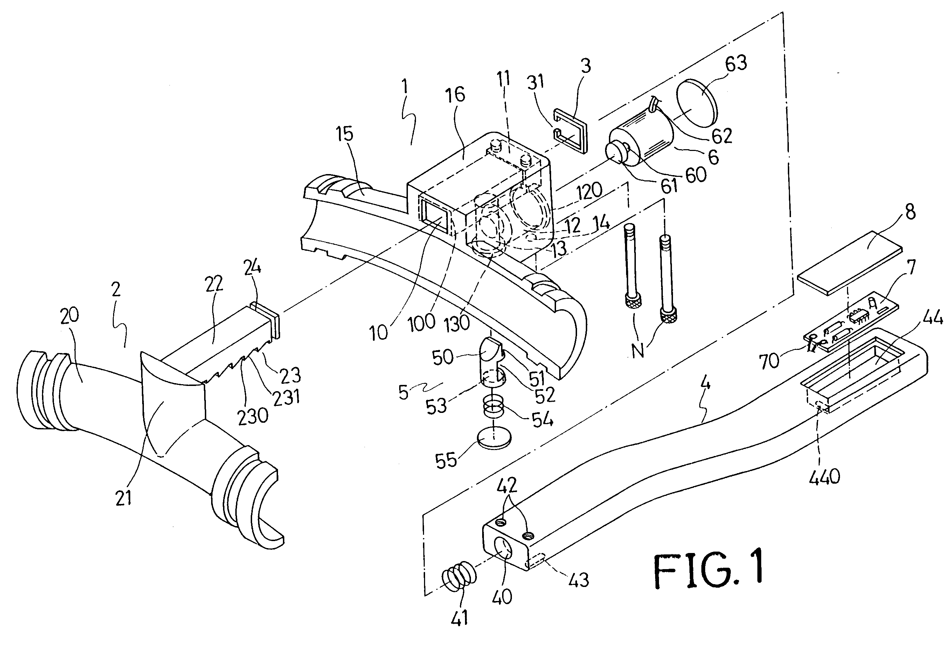

An automobile steering lock in the present invention, as shown in Figure 1 comprises an inner half housing 1, an outer half housing 2, a stop member 3, an elongate rod 4, a deadbolt 5, a motor 6, an electronic alarm set 7 and a cap 8 as main components combined together.

The inner half housing 1 has a block portion 16, a length-wise passageway 10 in an upper section of the block portion 16, a stop edge 100 of a small size, a chamber 11 formed in a rear end of the passageway 10, a motor hole 12 in parallel to the passageway 10 in the lower section of the block portion 16, a cover annular edge formed in an outer end of the motor hole 12 for a cover 63 to fit therein, a vertical deadbolt hole 13 provided in the lower section and communicating with the passageway 10 and the motor hole 12, an outer annular edge 130 in the deadbolt hole 13 for a cover 55 to fit therein, two vertical bolt holes 14, 14 provided in the bottom of a rear end of the block 16 for bolts 14, 14 to fit through upward, and a curved semiround portion 15 formed to abut in a right angle on the block portion 16 and able to fit around an outer surface of a portion of the steering wheel of an automobile.

The outer half housing 2 has a curved semiround portion 20, a vertical wall 21 extending up from a centre section of the semiround portion 20, a locking rod 22 extending horizontally inward from an upper end of the vertical wall 21 and having a plurality of straight and continuous grooves 23 in a bottom surface, an annular groove in the end of the locking rod 22, and each of the grooves 23 having a sloped face and a vertical face abutting on each other. The curved semiround portion 20 fits around an inner surface of a portion of the steering wheel of an automobile so that the two half housings 1 and 2 may surround the portion of the steering wheel in locking.

The stop member 3 is shaped as a rectangular ring, having an aperture 31 in one side and a large centre hole.

The elongate rod 4 has two bolt holes 42, 42 in the front end for the bolts 14, 14 to fit through upward so as to fit through the bolt holes 14, 14 in the inner half housing 1 to combine the rod 4 with the half semiround housing 1, a recess 40 in a front end face for disposing a spring 41 therein, a cord hole 43 in the front bottom, a chamber 44 with an upper opening in a rear portion, and a cord hole 440 in a front wall of the chamber 44.

The deadbolt 5 is to be disposed in the vertical deadbolt hole 13 of the block portion 16 of the inner half housing 1, having a sloped face 50 and a vertical face 51 formed to abut on each other in an upper end, a flat recess 52 cut in an intermediate portion, a spring recess 53 in a bottom to receive a spring 54 therein, and a cover 55 fitting and welded in the opening edge 130 of the deadbolt hole 13 to stop and bias the spring 54.

The motor 6 is disposed in the motor hole 12 of the inner half housing 1, having a shaft 60 extending to the front, a semiround activating block 61 fixed at the front of the shaft 60, a power cord 62 coming out of the end of the motor 6, and a cover 63 fitting and welded in the opening edge 120 of the motor hole 12 of the inner half housing 1.

The electronic alarm set 7 is disposed in the chamber 44 of the elongate rod 4, having a power cord 70 connected with the power cord 62 of the motor 6, able to giving out high decibel sounds in case of the steering wheel tried to be rotated or the body of the automobile being touched by a would-be thief after this lock is fixed thereon, and controlled by a remote controller.

The cap 8 is provided to close the upper opening of the chamber 44 to protect the electronic alarm set 7 after the set 7 is disposed therein.

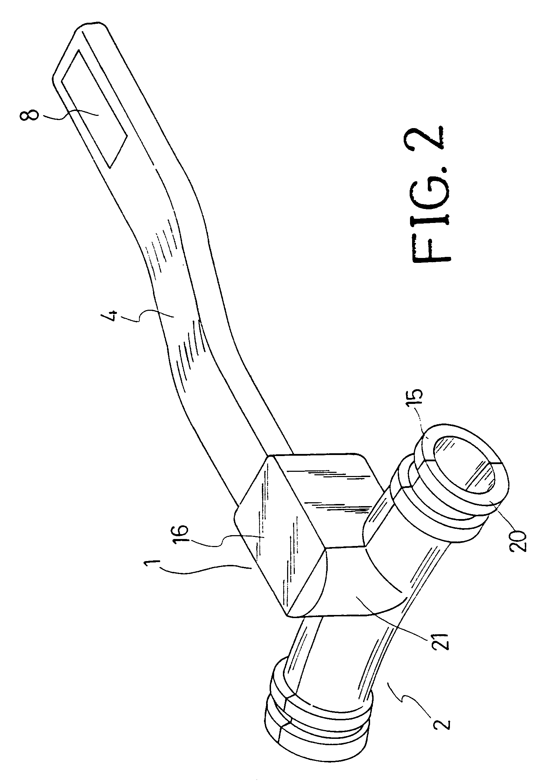

In assembling, referring to Figures 1 and 2, firstly, the locking rod portion 22 of the outer half housing 2 is fitted in the passageway 10 of the inner half housing 1, with the stop member 3 engaged in the annular groove 24 of the locking rod 22 to secure it in its position without completely separating from the block portion 16. Then the deadbolt 5 is inserted in the deadbolt hole 13 of the inner half housing 1, with the vertical face 51 touching with the vertical face 230 of one of the grooves 23 of the locking rod 22, with the spring 53 disposed in the recess 52, and with the cover 55 fitted in the opening edge 130 of the deadbolt hole 13 and welded thereon. Next, the electronic alarm set 7 is disposed in the chamber 44 of the elongate rod 4, with its power cord 70 led out of the hole 440 of the chamber 44 and out of the cord hole 43 in the front bottom of the elongate rod 4 and connected with the power cord 60 of the motor 6. After that, the cover 8 is closed up the chamber 44, with the spring 41 disposed in the recess 40, and then the front end of the elongate rod 4 is inserted in the chamber 11 of the inner half housing 1, with the two bolts 14, 14 screwing upward from under through the bolt holes 42, 42 and 14, 14, finishing assemblage.

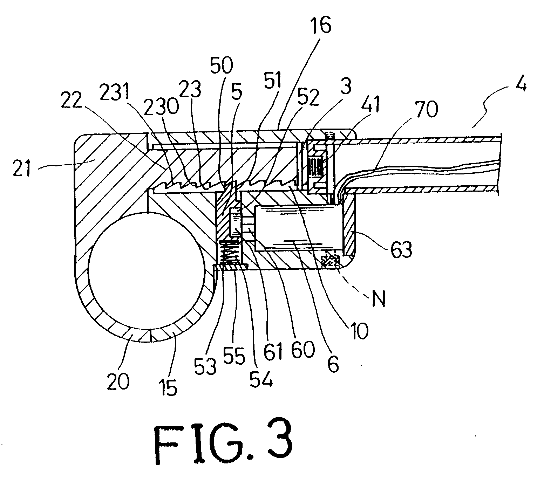

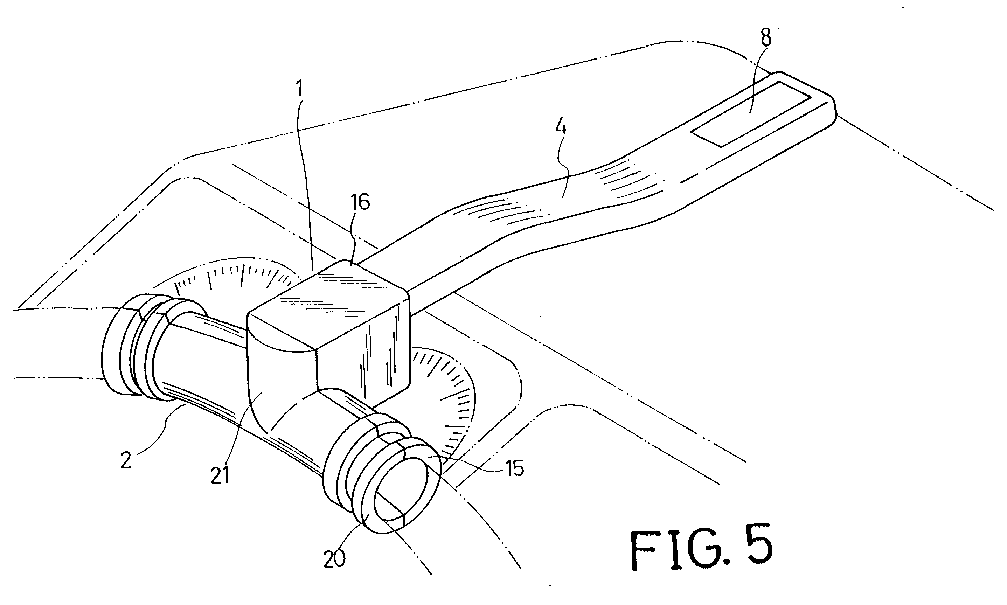

If this lock is to be applied on the steering wheel of an automobile, referring to Figures 3, 4 and 5, firstly, the semiround portion 15 of the inner half housing is made to fit around the outer surface of an upper portion of the steering wheel, letting the elongate rod 4 extend to the corner between the gauge panel and the windshield of th automobile, with the spring 54 pushing the deadbolt 5 upward to always engage one of the grooves 23 of the locking rod 22 of the outer half housing 2 in case of the deadbolt 5 in locked condition. As the vertical face 51 of the deadbolt 5 contacts with the vertical face 230 of one of the grooves 23, so the outer half housing 2 cannot be pulled outward but can be pulled inward because of the sloped face 50 of the deadbolt 5 possible to slide along the sloped face 231 owing to resilience of the spring 54, permitting the semiround portion 20 of the outer half housing 2 closely surround the sterring wheel, with the end of the locking rod 22 pressing the spring 41, with the elongate rod 4 having its end sticking to the corner of the gauge panel and the windshield, preventing the steering wheel from being rotated. In addition, a remote controller is operated to turn on the electronic alarm set 7, which is ready to give out high decibel alarm in case of this lock being moved by rotating the steering wheel or by pricking the body of the automobile.

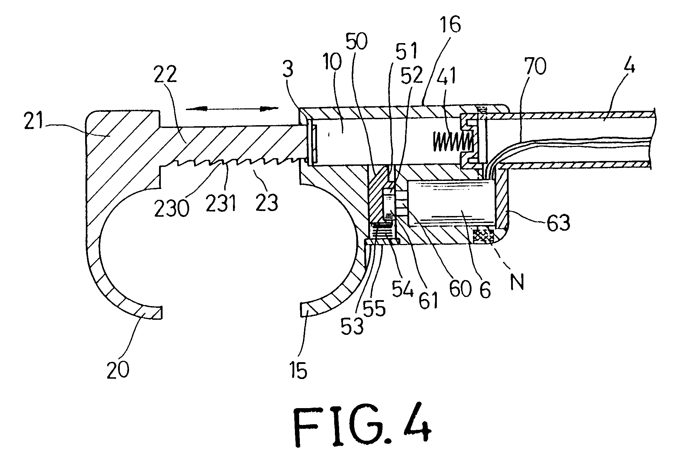

If this steering lock is to be disengaged from the steering wheel, referring to Figures 3 and 4, the remote controller is operated to cut off the electronic alarm set 7, and the motor 6 is started through the power cord 70, rotating the shaft 60 and the semiround block 61 through 180° and pushing down the deadbolt 5 so that the vertical face 51 may separate from the vertical face 230 of the groove 23, letting the spring 41 resiliently push the locking rod 22 outward for such a distance as to enable the outer half housing 2 released from the steering wheel. Then the stop member 3 may prevent the locking rod 2 from completely pulled out of the block portion 16 of the inner half portion.

As can be understood from the above description, this automobile steering lock has advantages as follows:
1. Locking and unlocking this lock is operated by means of the remote controller, very convenient and handy to handle.
2. The deadbolt moves steady in engagement and disengagement from any one of the grooves of the locking rod, securing locking or unlocking action stable and accurate.
3. The remote controller makes locking or unlocking action accurate and convenient, preventing the automobile from being stolen, with an alarm possible to be given out as well.

## Claims

1. An anti-theft lock for attachment to a steering wheel of an automobile, comprising:
an inner half housing (1) having a block portion (16) having a front, a rear, a top and a bottom and a curved semiround portion (15) formed across the front of said block portion, said block portion having a passageway (10) in an upper section extending rearwardly from the curved semiround portion, a chamber (11) behind the passageway in the rear end of the block portion, a motor hole (12) in parallel to the passageway in a lower section having an opening in the rear end of the block portion, a deadbolt hole (13) extending upwardly from the bottom of the block portion and communicating with the passageway and the motor hole, two bolt holes (14) being provided extending upwardly from the bottom of the block portion towards the rear end thereof, the deadbolt hole (13) having an opening edge of a larger diameter than itself;
an outer half housing (2) having a curved semiround portion (20) complementary to said curved semi-round portion (15) in said inner half housing (1) and a wall (21) extending up from a centre portion of the semiround portion, a locking rod (22) extending laterally from an upper end of the wall and having a plurality of straight continuous grooves (23) on a bottom surface thereof;
an elongate rod (4) having its front end combined with the rear end of the block portion (16) of said inner half housing (1) by means of two bolts (14), a recess (40) in a front end surface for disposing a spring (41) therein, a cord hole (43) in a front end bottom, a chamber (44) with an upper opening in a rear portion, and a cord hole (440) in a front wall of the chamber;
an electronic alarm set (7) disposed in the chamber (44) of said elongate rod (4), and a cap (8) provided to close up the upper opening of the chamber to protect the electronic alarm set;
a deadbolt (5) disposed in the deadbolt hole (13) in the block portion (16) of said inner half housing, the deadbolt having a sloped face (50) and a vertical face (51) abutting on each other at the top of the deadbolt, a flat recess (52) in an intermediate portion, and a spring recess (53) in a bottom end;
a spring (54) disposed in the spring recess of said deadbolt;
a cover (55) welded to close up the deadbolt hole and urging to bias the spring (54) disposed therein;
whereby the anti-theft lock having a motor (6) disposed in the motor hole (12) of the block portion (16) of said inner half housing (1) having a shaft (60) extending inward and fixed with a semiround activating block (61) at its end, said semiround activating block fitting in the flat recess (52) of said deadbolt (5), the motor having a power cord (62) disposed through the cord hole (440) in the front wall of the chamber which is connected with a power cord 70 of said electronic alarm set (7), whereby the anti-theft lock is attached to a steering wheel of an automobile by said inner half housing (1) and said outer half housing (2) being fitted around a portion of the steering wheel and being locked by said deadbolt (5) engaging one of the grooves (23) of the locking rod (22) of the outer half housing, the anti-theft lock being provided with a remote controller to turn on the electronic alarm set ready for giving out high decibel sounds in case of a would-be thief pricking the body of an automobile or the steering wheel rotated so as to prevent the automobile from being stolen and de-activate the same, said remote controller also simultaneously activating or de-activating the motor (6) in the block portion to rotate the activating block (61) to push up or pull down the deadbolt thereby locking or unlocking the anti-theft lock.

2. An anti-theft lock for attachment to a steering wheel of an automobile as claimed in Claim 1, wherein said locking rod (22) of said outer half housing (2) has an annular groove (24) in a rear end for a stop ring (3)to engage with so as to prevent said locking rod from separating completely from the block portion (16) of said inner half housing (1).

## Patentansprüche

1. Diebstahlverhinderndes Schloß zur Befestigung an einem Steuerrad eines Kraftfahrzeugs, das aufweist:
eine innere Gehäusehälfte (1), die einen Blockabschnitt (16) mit einem Front-, einem hinteren, einem Decken- und einem Boden- sowie einem gebogenen halbrunden Abschnitt (15), der über dem Frontabschnitt des Blockabschnitts ausgebildet ist, besitzt, wobei der Blockabschnitt eine Passage (10) in einem oberen Bereich, die sich vom gebogenen halbrunden Abschnitt nach hinten erstreckt, eine Kammer (11) hinter der Passage im hinteren Ende des Blockabschnitts, eine Motoröffnung (12) parallel zur Passage in einem unteren Abschnitt mit einer Öffnung im hinteren Ende des Blockabschnitts, eine Abstellbolzen-Öffnung (13), die sich vom Boden des Blockabschnitts nach oben erstreckt und mit der Passage und der Motoröffnung verbunden ist, wobei zwei Bolzen-Öffnungen (14) vorgesehen sind, die sich vom Boden des Blockabschnitts gegen dessen hinteres Ende nach oben erstrecken, wobei die Öffnung (13) für den Abstellbolzen eine Öffnungskante größeren Durchmessers als er selbst besitzt;
eine äußere Gehäusehälfte (2), die einen gebogenen halbrunden Abschnitt (20) komplementär zu dem gebogenen halbrunden Abschnitt (15) in der inneren Gehäusehälfte (1), eine Wand (21), die sich von einem Mittelabschnitt des halbrunden Abschnitts nach oben erstreckt, und eine Schließstange, (22) die sich seitlich von einem oberen Ende der Wand erstreckt und mehrere gerade kontinuierliche Vertiefungen (23) in ihrer Bodenfläche aufweist, besitzt;
eine lange Stange (4), deren Vorderende mit dem hinteren Ende des Blockabschnitts (16) der inneren Gehäusehälfte (1) mittels zwei Bolzen (14) verbunden ist, mit einer Vertiefung (40) in einer Oberfläche am Frontende, um eine Feder (41) darin anzuordnen, einer Leitungsöffnung (43) in einem Boden am Frontende; einer Kammer (44) mit einer oberen Öffnung in einem hinteren Abschnitt, und einer Leitungsöffnung (440) in einer Frontwand der Kammer;
eine elektronische Alarmeinrichtung (7), die in der Kammer (44) der langen Stange (4) angeordnet ist, und einen Deckel (8) zum Verschließen der oberen Öffnung der Kammer, um die elektronische Alarmeinrichtung zu schützen;
einen Abstellbolzen (5) in der Abstellbolzen-Öffnung (13) im Blockabschnitt (16) der inneren Gehäusehälfte, wobei der Abstellbolzen eine abgeschrägte Fläche (50) und eine vertikale Fläche (51), die am oberen Ende des Abstellbolzens aneinanderstoßen, eine flache Vertiefung (52) in einem Mittelabschnitt, und eine Federaufnahme (53) in einem unteren Ende aufweist;
eine Feder (54), die in der Federaufnahme des Abstellbolzens angeordnet ist,
einen Deckel (55), der zum Verschluß der Abstellbolzen-Öffnung und um zur Verstärkung der darin angeordneten Feder (54) Druck auszuüben, angeschweißt ist;
wobei: das diebstahlverhindernde Schloß einen Motor (6) besitzt, der in der Motoröffnung (12) des Blockabschnitts (16) der inneren Gehäusehälfte (1) angeordnet ist, mit einer sich nach innen erstreckenden Welle, an deren Ende ein halbrunder aktivierender Block (61) befestigt ist, wobei der halbrunde aktivierende Block in die flache Vertiefung (52) des Abstellbolzens (5) paßt; der Motor eine Energieversorgungsleitung (62) besitzt, die durch die Front-Leitungsöffnungswand (440) der Kammer verläuft, die mit einer Energieversorgungsleitung (70) der elektronischen Alarmeinrichtung (7) verbunden ist, wobei das diebstahlverhindernde Schloß an einem Steuerrad eines Kraftfahrzeugs dadurch befestigt ist, daß die innere Gehäusehälfte (1) und die äußere Gehäusehälfte (2) um einen Abschnitt des Steuerrads gelegt sind und durch den Abstellbolzen (5) verriegelt sind, der mit einer der Vertiefungen (23) der Schließstange (22) der äußeren Gehäusehälfte in Eingriff steht, wobei das diebstahlverhindernde Schloß mit einer Fernsteuerung ausgerüstet ist, um die elektronische Alarmeinrichtung anzuschalten, Geräusche mit hohem Decibel dann abzugeben, falls ein möglicher Dieb den Kraftfahrzeugkörper bewegt oder das Steuerrad gedreht wird, um zu verhindern, daß das Kraftfahrzeug gestohlen wird und um diese zu desaktivieren; wobei die Fernsteuerung auch gleichzeitig den Motor (6) im Blockabschnitt so aktiviert, daß er den aktivierenden Block (61) dreht, um den Abstellbolzen auf- oder abwärts zu bewegen, wodurch das diebstahlverhindernde Schloß gesperrt oder entsperrt wird.

2. Diebstahlverhinderndes Schloß zur Befestigung an einem Steuerrad eines Kraftfahrzeuges, wie in Anspruch 1 beansprucht, wobei die Schließstange (22) der äußeren Gehäusehälfte (2) eine ringförmige Vertiefung (24) in einem hinteren Ende zum Eingriff mit einem Anschlagring (3) aufweist, um die Schließstange an der vollständigen Trennung vom Blockabschnitt (16) der inneren Gehäusehälfte (1) zu hindern.

## Revendications

1. Verrou antivol destiné à être fixé à un volant de direction d'une automobile, comprenant :
un demi-cadre intérieur (1) comprenant une partie de blocage (16) qui possède un avant, un arrière, une partie supérieure et un fond, et une partie semi-circulaire incurvée (15) formée en travers de l'avant de ladite partie de blocage, ladite partie de blocage présentant un passage (10) aménagé dans une section supérieure et s'étendant vers l'arrière à partir de la partie semi-circulaire incurvée, une chambre (11) située derrière le passage et aménagée dans l'extrémité arrière de la partie de blocage, un trou pour moteur (12) aménagé parallèlement au passage, dans une section inférieure, et présentant une ouverture à l'extrémité arrière de la partie de blocage, un trou de pêne dormant (13) s'étendant vers le haut depuis le fond de la partie de blocage et communiquant avec le passage et avec le trou pour moteur, deux trous de boulon (14) prévus de façon à s'étendre vers le haut depuis le fond de la partie de blocage, au voisinage de son extrémité arrière, le trou de pêne dormant (13) ayant un bord d'ouverture qui a un plus grand diamètre que lui ;
un demi-cadre extérieur (2) ayant une partie semi-circulaire incurvée (20), complémentaire de ladite partie semi-circulaire incurvée (15) dudit demi-cadre intérieur (1), et une paroi (21) s'étendant vers le haut depuis une partie centrale de la partie semi-circulaire, une tige de verrouillage (22) s'étendant dans la direction latérale depuis l'extrémité supérieure de la paroi et ayant une pluralité de rainures rectilignes continues (23) sur sa surface inférieure ;
une longue tige (4) ayant son extrémité avant combinée à l'extrémité arrière de la partie de blocage (16) dudit demi-cadre intérieur (1) au moyen de deux boulons (14), un évidement (40) aménagé dans une surface d'extrémité avant et destiné à recevoir un ressort (41), un trou de cordon (43) aménagé dans le fond d'une extrémité avant, une chambre (44) ayant une ouverture supérieure, aménagée dans une partie arrière, et un trou de cordon (440) aménagé dans une paroi avant de la chambre ;
un ensemble d'alarme électronique (7) disposé dans la chambre (44) de ladite longue tige (4), et un couvercle (8) prévu pour fermer l'ouverture supérieure de la chambre pour protéger l'ensemble d'alarme électronique ;
un pêne dormant (5) disposé dans le trou de pêne dormant (13) aménagé dans la partie de blocage (16) dudit demi-cadre intérieur, le pêne dormant ayant une face inclinée (50) et une face verticale (51) butant l'une contre l'autre au niveau de la partie supérieure du pêne dormant, un évidement plat (52) aménagé dans une partie intermédiaire, et un évidement de ressort (53) aménagé dans une extrémité inférieure ;
un ressort (54) disposé dans l'évidement de ressort dudit pêne dormant ;
un couvercle (55) soudé de façon à fermer le trou de pêne dormant et à pousser pour le contraindre le ressort (54) qui y est disposé ;
ce en conséquence de quoi le verrou antivol possède un moteur (6) disposé dans le trou pour moteur (12) de la partie de blocage (16) dudit demi-cadre intérieur (1) et ayant un arbre (60) qui s'étend vers l'intérieur et qui est pourvu d'un bloc d'actionnement semi-circulaire (61) à son extrémité, ledit bloc d'actionnement semi-circulaire s'ajustant dans l'évidement plat (52) dudit pêne dormant (5), le moteur ayant un cordon d'alimentation (62) disposé au travers du trou de cordon (440) aménagé dans la paroi avant de la chambre et connecté à un cordon d'alimentation 70 dudit ensemble d'alarme électronique (7), ce en conséquence de quoi le verrou antivol est fixé à un volant de direction d'une automobile grâce au fait de monter ledit demi-cadre intérieur (1) et ledit demi-cadre extérieur (2) autour d'une partie du volant de direction et de les verrouiller en faisant entrer en prise ledit pêne dormant (5) avec l'une des rainures (23) de la tige de verrouillage (22) du demi-cadre extérieur, le verrou antivol étant muni d'un actionneur à distance servant à mettre l'ensemble d'alarme électronique en tension de façon qu'il soit prêt à émettre des sons de grande intensité acoustique dans le cas où un éventuel voleur perforerait la carrosserie d'une automobile ou ferait tourner le volant de direction, de façon à empêcher le vol de l'automobile, et à le désactiver, l'actionneur à distance activant et désactivant également simultanément à distance le moteur (6) se trouvant dans la partie de blocage pour faire tourner le bloc d'actionnement (61) et pousser le pêne dormant vers le haut ou le tirer vers le bas afin de verrouiller ou déverrouiller le verrou antivol.

2. Verrou antivol destiné à être fixé à un volant de direction d'une automobile selon la revendication 1, dans lequel ladite tige de verrouillage (22) dudit demi-cadre extérieur (2) possède une gorge annulaire (24) aménagée dans une extrémité arrière et destinée à entrer en prise avec une bague de butée (3) de façon à empêcher ladite tige de verrouillage de se séparer complètement de la partie de blocage (16) dudit demi-cadre intérieur (1).
